# EUROPÄISCHE PATENTSCHRIFT

(11) **EP 2 135 835 B1**
(45) Veröffentlichungstag und Bekanntmachung des Hinweises auf die Patenterteilung: **26.10.2011**
(21) Anmeldenummer: 09159389.7
(22) Anmeldetag: 05.05.2009
(51) Int. Cl.: B66C 23/62, B66C 23/82

(54) **Kran-Wippzylinderlagerung mit Kugelkalotte**
Crane rocker cylinder bearing with spherical recess
Palier de vérin basculant de grue doté d'une calotte sphérique

(30) Priorität: 19.06.2008 DE 102008029116
(43) Veröffentlichungstag der Anmeldung: 23.12.2009
(73) Patentinhaber: Manitowoc Crane Group France SAS, 69130 Ecully (FR)
(72) Erfinder: Brinkmann, Jan, 26125, Oldenburg (DE); Stührwoldt, Dieter, 26384, Wilhelmshaven (DE)
(74) Vertreter: Schwabe - Sandmair - Marx

(56) Entgegenhaltungen:
- DE-U1- 8 900 305
- DE-U1- 9 318 480
- JP-U- 61 193 991

## Beschreibung

Die Erfindung betrifft die Lagerung eines Wippzylinder eines Krans, insbesondere eines Mobilkrans.

Der Wippzylinder eines solchen Krans ist ein hydraulischer Zylinder, der zwischen einem Punkt an der Kran-Basis (bei Mobilkranen z.B. am Drehtisch) und einer Lagerstelle am Kranausleger angeordnet ist und beim Ausfahren dafür sorgt, dass der Ausleger aufgerichtet wird.

Aus der DE 89 00 305 U1 ist ein Gabelhubwagen zum Heben und Senken sowie Transportieren von Lasten bekannt, wobei ein Auflager über Bolzen am Lastarm und einer Auflageplattform angelenkt ist.

Aus der JP 61193991 U ist ein Kran mit einem Teleskopierzylinder bekannt, welcher gelenkig mit einem Kranturm verbunden ist.

Im Mobilkranbau stellt der Wippzylinder eine der Hauptkomponenten dar. Er muss einwandfrei funktionieren; insbesondere soll er im Betrieb nicht ruckeln. Das gleichmäßige Ein- und Ausfahren des Zylinders muss gewährleistet sein, weil sonst ein gleichmäßiger Kranbetrieb nicht möglich ist, und außerdem kann die Messung der Zylinderkraft als Eingangswert für die Lastmomentbegrenzung nur dann sauber erfolgen, wenn der Zylinder möglichst reibungsfrei (und auch ruckelfrei) läuft. Daher ist die Ausführung und Lagerung dieses Wippzylinders von hoher Wichtigkeit.

Ein Problem stellt sich insbesondere auch bei der seitlichen Verformung des Auslegers ein. Damit der Wippzylinder nicht verspannt wird und somit problemlos laufen kann bzw. die Führungsbänder im Zylinder vor Schaden bewahrt werden, werden die oberen Anschlüsse an den Ausleger gemäß dem Stand der Technik oft möglichst gelenkig ausgeführt, und teilweise kommen hier Gelenklager zum Einsatz. Diese Lager erlauben es dem Wippzylinder unabhängig von der seitlichen Verformung des Auslegers zu arbeiten. Durch die Einführung neuer Materialien und immer länger werdender Auslegersysteme wird sich die seitliche Verformung der zukünftigen Auslegersysteme noch verstärken. Der Einfluss auf den Wippzylinder wird daher immer mehr an Bedeutung gewinnen.

Es ist deshalb die Aufgabe der vorliegenden Erfindung, eine Kran-Wippzylinderlagerung bereitzustellen, welche den hohen, und zukünftig noch höheren Anforderungen gerecht wird, wie sie oben beschrieben worden sind. Insbesondere soll eine stabile Lagerung bereitgestellt werden, welche den problemlosen Lauf des Wippzylinders - auch bei seitlichen Verformungen - garantiert.

Diese Aufgabe wird erfindungsgemäß durch eine Wippzylinder-Lagerung für einen Kran, insbesondere einen Mobilkran, gemäß dem Anspruch 1 gelöst. Die Unteransprüche definieren bevorzugte Ausführungsformen der Erfindung.

Gemäß der vorliegenden Erfindung ist der Wippzylinder an mindestens einem seiner Enden durch ein Kugelkalottenlager mit einer Lagerstelle am Kran verbunden. Das Kugelkalottenlager ist optimal für den auftretenden Lastfall geeignet, insbesondere leitet es die aus der seitlichen Verformung des Auslegers entstehenden Kräfte und Momente nicht in den Wippzylinder ein, wodurch dessen Betrieb ungestört und optimal verlaufen kann. Dies gilt insbesondere auch für relativ starke seitliche Verformungen, wo die Kugelkalotte noch immer den ausreichenden Halt bieten kann aber lediglich Druckkräfte weiterleitet.

Durch die erfindungsgemäße Kugelkalottenlagerung wird auch zur notwendigen leichten Bauweise beigetragen. Zusätzliche Traglaststeigerungen sind nur möglich, wenn die Einzelkomponenten bei gleichem Gewicht mehr Leistung erreichen. Die bisherigen Ausführungsformen sind in Bezug auf den Einbau als eher schwer zu beurteilen, während die erfindungsgemäße Kugelkalottenlagerung in sehr leichter Ausführung baubar ist.

Zudem wird der Zylinder durch seinen Hub und seine Einbaulänge begrenzt und die bisherigen Lagerlösungen, insbesondere diejenigen, die als Gelenklager zur Kompensation seitlicher Verformungen ausgeführt wurden, hatten eine erhebliche Baulänge, die wiederum einen entscheidenden Einfluss auf die für den Hub nicht verfügbare "Totlänge" ausübte. All diese Probleme löst das erfindungsgemäße Lagersystem gleich mit, weil das Kugelkalottenlager ein sehr kurz und leicht bauendes Lagersystem ist.

Die Lagerstelle des Wippzylinders, die erfindungsgemäß mit dem Kugelkalottenlager ausgestattet ist, ist bevorzugt eine Lagerstelle am Kranausleger; sie kann aber grundsätzlich auch eine Lagerstelle an der Kranbasis, insbesondere am Drehtisch eines Mobilkrans sein. Hier ist zu bemerken, dass es im Rahmen der vorliegenden Erfindung grundsätzlich auch möglich ist, beide Lagerstellen des Wippzylinders mit dem Kugelkalottenlager auszustatten, obwohl bei einer bevorzugten Ausführungsform das Kugelkalottenlager an nur einem Ende des Wippzylinders, vorzugsweise am Auslegerende, angeordnet ist, während das andere Ende mit einem scharnierartigen Lager (oder "Bolzenlager") gelagert ist.

Das Kugelkalottenlager selbst kann bei einer Ausführungsform eine Kugelkalotte und eine Lagerschale aufweisen, wobei auch hier verschiedene Varianten möglich sind. Die Kugelkalotte wird den konkaven Teil des Lagers bilden, und sie ist mit ihrer Teilkugelform genau an die "Innenkugel", also den konvexen Teil der Lagerschale angepasst. Bei einer Variante ist die Kugelkalotte wippzylinderseitig und die Lagerschale an der Kran-Lagerstelle, d.h. kranseitig angeordnet. Bei der anderen Ausführungsvariante ist die Kugelkalotte kranseitig und die Lagerschale wippzylinderseitig angeordnet.

Das Kugelkalottenlager kann durch eine Zugsicherung ergänzt werden, obwohl es grundsätzlich eine druckbeanspruchtes Bauteil ist. Die Zugsicherung kann beidseitig der Lagerstelle an- oder eingreifende Halteelemente aufweisen, insbesondere Bügel, Haltestangen, Sicherungsbleche oder Seilhalterungen bzw. andere zugsichernd wirkende Bauelemente. Gemäß einer Ausführungsoption hat die Zugsicherung kugelkalottenseitig ein An- oder Eingriffselement, speziell eine Ausnehmung, eine Umlaufnut oder eine Ein- oder Hinterschneidung.

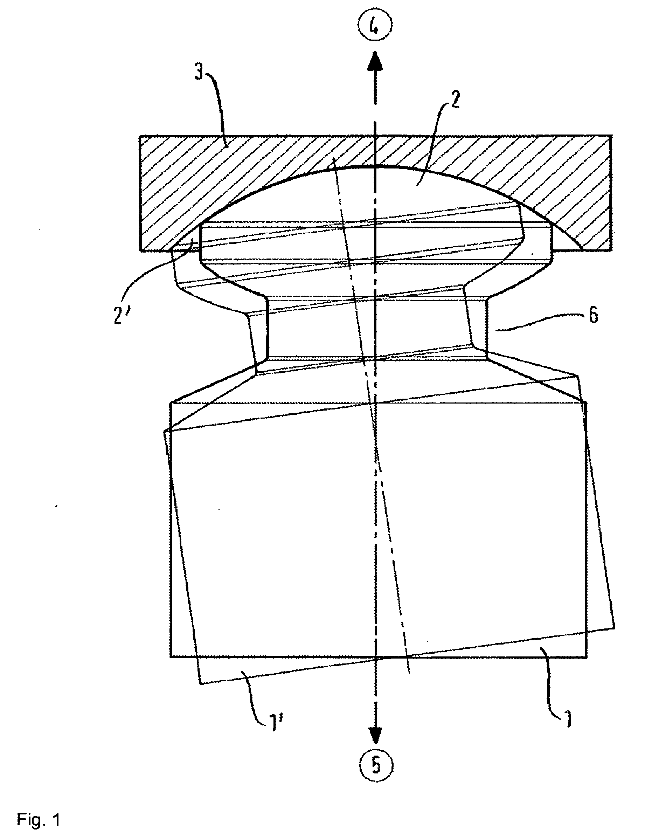

Die Erfindung wird im Weiteren anhand eines Auführungsbeispiels und unter Bezugnahme auf die beiliegende einzige Zeichnung näher erläutert. Sie kann alle hierin beschriebenen Merkmale einzeln sowie in jedweder sinnvollen Kombination umfassen. Die Zeichnung zeigt schematisch die Grundelemente der Wippzylinderlagerung.

Das Bezugszeichen 1 wird in der Zeichnung für den Wippzylinder verwendet, der an seinem oberen Ende eine Umlaufnut 6 und eine daran anschließende Kugelkalotte 2 aufweist. Die Kugelkalotte 2 ist in der Lagerschale 3 gelagert, die am Ausleger angeordnet ist, wobei die Ausleger-Lagerstelle hier nur schematisch mit dem Bezugszeichen 4 dargestellt ist. Das Bezugszeichen 5 weist wippzylinderseitig auf den unteren Teil dieses Zylinders zu dessen zweiter Lagerstelle an der Kranbasis. In einer helleren Darstellung ist der Wippzylinder noch in einer um einige Grad (hier 8°) verschwenkten Position dargestellt, in welcher er die Druckkräfte ebenso aufnehmen kann, ohne verspannende Kräfte oder Momente aufnehmen zu müssen.

Die Zeichnung zeigt also den oberen Anschluss des Wippzylinders 1 an den Ausleger 4 mit der Kugelkalotte 2 und der Lagerschale 3. Wie oben schon bemerkt, kann die Ausführung auch umgekehrt erfolgen (Kalotte am Ausleger; Schale am Wippzylinder). Der mögliche Schwenkbereich am Wippzylinderanlenkpunkt beträgt je nach Kran etwa bis zu +/- 10°, speziell etwa bis zu +/- 5°. Die Ausführung des Schalenradius erfolgt analog zur Kalotte 2, wobei der Anfang und das Ende durch die unterste und oberste Stellung des Wippzylinders 1 bestimmt werden. Die Kalotte 2 und die Schale 3 werden rundum bzw. kreissymmetrisch ausgeführt, d.h. über 360°, wodurch der Wippzylinder 1 in jeder Achse eine Drehbewegung kompensieren kann, insbesondere eine Drehbewegung des Auslegers 4.

Diese erfindungsgemäße Ausführung ist möglich, weil der Wippzylinder 1 ein druckbeanspruchtes Bauteil ist. Zugkräfte am Zylinder treten nur für den Dolly-Betrieb auf, also wenn der Ausleger über einen Anhänger vorgespannt wird, um die maximale Achslast zu reduzieren. Die Kräfte betragen dabei nur einen Bruchteil der maximal auftretenden Druckkraft, und die Kraftübertragung ist daher einfacher zu realisieren. Die Sicherung des Kalottensystems erfolgt erfindungsgemäß vorzugsweise durch Haltestangen (Bügel) bzw. aufgebrachte Sicherungsbleche, die hinter die Kalotte 2 in die Umfangsnut 6 eingreifen können und damit die Aufnahme von Zugkraft ermöglichen.

Mit diesem erfindungsgemäßen System kann der Wippzylinder absolut zwängungsfrei zum Ausleger eingebaut werden, und durch Auslegerverformungen werden keine Zwangsmomente in die Kolbenstange und damit die Führungsbänder des Zylinders eingeleitet. Die Totlänge kann deutlich reduziert werden, weil die Kugelkalotte sehr kurz baut, wodurch Gewicht und Einbaulänge reduziert werden. Die Fertigung ist relativ einfach, wodurch Kosten und ebenfalls Gewicht reduziert werden. Der Zusammenbau des Krans wird vereinfacht, da keine Lagerbolzen in Flucht gebracht werden müssen; die Lagerschale wird einfach auf den Zylinder, d.h. auf die Kalotte abgesetzt.

## Patentansprüche

1. Lagerung eines Wippzylinders (1) eines Krans, insbesondere eines Mobilkrans, **dadurch gekennzeichnet, dass** der Wippzylinder (1) an mindestens einem seiner Enden durch ein Kugelkalottenlager (2, 3) mit einer Lagerstelle am Kran verbunden ist.

2. Lagerung nach Anspruch 1, **dadurch gekennzeichnet, dass** die Lagerstelle eine Lagerstelle am Kranausleger (4) ist.

3. Lagerung nach Anspruch 1, **dadurch gekennzeichnet, dass** die Lagerstelle eine Lagerstelle an der Kranbasis (5), insbesondere am Drehtisch eines Mobilkrans, ist.

4. Lagerung nach einem der Ansprüche 1 bis 3, **dadurch gekennzeichnet, dass** das Kugelkalottenlager eine Kugelkalotte (2) und eine Lagerschale (3) aufweist, wobei die Kugelkalotte (2) wippzylinderseitig und die Lagerschale (3) an der Lagerstelle am Kran angeordnet ist.

5. Lagerung nach einem der Ansprüche 1 bis 3, **dadurch gekennzeichnet, dass** das Kugelkalottenlager eine Kugelkalotte (2) und eine Lagerschale (3) aufweist, wobei die Kugelkalotte (2) an der Lagerstelle am Kran und die Lagerschale (3) wippzylinderseitig angeordnet ist.

6. Lagerung nach einem der Ansprüche 1 bis 5, **dadurch gekennzeichnet, dass** das Kugelkalottenlager (2, 3) durch eine Zugsicherung ergänzt ist.

7. Lagerung nach Anspruch 6, **dadurch gekennzeichnet, dass** die Zugsicherung beidseitig der Lagerstelle an- oder eingreifende Halteelemente aufweist, insbesondere eines oder mehrere der Folgenden:
- Bügel,
- Haltestangen,
- Sicherheitsbleche, oder
- Seilhalterungen.

8. Lagerung nach Anspruch 6 oder 7, **dadurch gekennzeichnet, dass** die Zugsicherung kugelkalottenseitig ein An- oder Eingriffselement aufweist, speziell eine Ausnehmung, eine Umlaufnut (6) oder eine Ein- oder Hinterschneidung.

9. Lagerung nach einem der Ansprüche 1 bis 8, **dadurch gekennzeichnet, dass** das Kugelkalottenlager (2,3) an nur einem Ende des Wippzylinders, vorzugsweise am Ausleger-Ende, angeordnet ist, während das andere Ende, vorzugsweise das Basis-Ende, mit einem scharnierartigen Lager, insbesondere einem Bolzenlager, gelagert ist.

## Claims

1. A bearing of a luffing cylinder (1) of a crane, in particular a mobile crane, **characterised in that** the luffing cylinder (1) is connected by at least one of its end to a bearing point on the crane by means of a spherical calotte-shaped bearing (2, 3).

2. The bearing according to claim 1, **characterised in that** the bearing point is a bearing point on the crane jib (4).

3. The bearing according to claim 1, **characterised in that** the bearing point is a bearing point on the crane base (5), in particular on the slewing ring of a mobile crane.

4. The bearing according to any one of claims 1 to 3, **characterised in that** the spherical calotte-shaped bearing has a spherical calotte (2) and a bearing shell (3), wherein the spherical calotte (2) is disposed at the luffing cylinder end and the bearing shell (3) is disposed on the crane at the bearing point.

5. The bearing according to any one of claims 1 to 3, **characterised in that** the spherical calotte-shaped bearing has a spherical calotte (2) and a bearing shell (3), wherein the spherical calotte (2) is disposed on the crane at the bearing point and the bearing shell (3) is disposed at the luffing cylinder end.

6. The bearing according to any one of claims 1 to 5, **characterised in that** the spherical calotte-shaped bearing (2, 3) is additionally provided with a tension lock.

7. The bearing according to claim 6, **characterised in that** the tension lock has fastener or locator retaining elements on either side of the bearing point, in particular one or more of the following:
- brackets;
- retaining rods;
- lock plates; or
- cable stays.

8. The bearing according to claim 6 or 7, **characterised in that** the tension lock has a fastener or locator element at the spherical calotte end, specifically a recess, a circumferential groove (6) or an indentation or undercut.

9. The bearing according to any one of claims 1 to 8, **characterised in that** the spherical calotte-shaped bearing (2, 3) is disposed at only one end of the luffing cylinder, preferably at the jib end, whilst the other end, preferably the base end, is mounted by means of a knuckle-type bearing, in particular a bolt bearing.

## Revendications

1. Système de palier d'un vérin basculant (1) d'une grue, en particulier d'une grue mobile, **caractérisé en ce que** le vérin basculant (1) est relié par au moins une de ses extrémités à une grue par l'intermédiaire d'un palier à calotte sphérique (2, 3) avec un point d'appui.

2. Système de palier selon la revendication 1, **caractérisé en ce que** le point d'appui est un point d'appui au niveau de la flèche (4) de la grue.

3. Système de palier selon la revendication 1, **caractérisé en ce que** le point d'appui est un point d'appui au niveau de la base (5) de la grue, en particulier sur le plateau rotatif d'une grue mobile.

4. Système de palier selon l'une quelconque des revendications 1 à 3, **caractérisé en ce que** le palier à calotte sphérique comporte une calotte sphérique (2) et une coquille de coussinet (3), la calotte sphérique (2) étant disposée du côté du vérin basculant et la coquille de coussinet (3) étant disposée sur la grue au niveau du point d'appui.

5. Système de palier selon l'une quelconque des revendications 1 à 3, **caractérisé en ce que** le palier à calotte sphérique comporte une calotte sphérique (2) et une coquille de coussinet (3), la calotte sphérique (2) étant disposée sur la grue au niveau du point d'appui et la coquille de coussinet (3) étant disposée du côté du vérin basculant.

6. Système de palier selon l'une quelconque des revendications 1 à 5, **caractérisé en ce que** le palier à calotte sphérique (2, 3) est complété par une sécurité anti-traction.

7. Système de palier selon la revendication 6, **caractérisé en ce que** la sécurité anti-traction comporte des éléments de retenue s'appliquant ou s'engageant de part et d'autre du point d'appui, en particulier un ou plusieurs des éléments suivants :
- étriers,
- barres de retenue,
- tôles de sécurité, ou
- fixations par câbles.

8. Système de palier selon la revendication 6 ou 7, **caractérisé en ce que** la sécurité anti-traction comporte du côté de la calotte sphérique un élément d'attaque ou de prise, en particulier un évidement, une rainure périphérique (6) ou une entaille ou un détalonnage.

9. Système de palier selon l'une quelconque des revendications 1 à 8, **caractérisé en ce que** le palier à calotte sphérique (2, 3) est monté sur une seule extrémité du vérin basculant, de préférence sur l'extrémité du côté de la flèche, tandis que l'autre extrémité, de préférence l'extrémité du côté de la base, est montée avec un palier du type articulé, en particulier un palier à tourillon.
